# EUROPEAN PATENT APPLICATION

(11) **EP 4 807 538 A1**
(43) Date of publication of application: **16.09.2026**
(21) Application number: 25865127.2
(22) Date of filing: 15.08.2025
(51) Int. Cl.: G06F 8/71, G06F 8/60

(54) **GLOBAL DATA COMPLIANCE CONFIGURATION METHOD AND SYSTEM, ELECTRONIC DEVICE, AND PROGRAM PRODUCT**

(30) Priority: 11.09.2024 CN 202411269607
(71) Applicant: Chery Automobile Co., Ltd., Wuhu, Anhui 241006 (CN); Wuhu Lion Automotive Technologies Co., Ltd., Wuhu, Anhui 241006 (CN)
(72) Inventor: TAO, Cunxiu, Wuhu, Anhui 241006 (CN)
(74) Representative: Adamson Jones
(86) International application number: PCT/CN2025/115178
(87) International publication number: WO 2026/056628

(57) **Abstract**

The present application relates to the technical field of computers, and in particular to a global data compliance configuration method and system, an electronic device, and a program product. The method comprises: determining whether a data configuration request is received; if the data deployment request is received, determining a target deployment area on the basis of the data deployment request, and building an initial system of the target deployment area; and docking the initial system with a preset data compliance configuration center to generate a new localization system that meets deployment requirements of the target deployment area. Thus, the problems that differences in different data management systems of enterprises in different countries increase over time, and operations and maintenance costs are increased are solved, and unified configuration and a unified system of platform data compliance in countries can be achieved, thereby achieving unified operation.

## Description

The present disclosure claims priority to Chinese Patent Application No. 202411269607.X, filed on September 11, 2024, and entitled "METHOD AND SYSTEM FOR CONFIGURING GLOBAL DATA COMPLIANCE, ELECTRONIC DEVICE, AND PROGRAM PRODUCT", the entire contents of which are incorporated herein by reference.

### TECHNICAL FIELD

The present disclosure relates to the field of computer technologies, and particularly to a method and system for configuring global data compliance, an electronic device, and a program product.

### BACKGROUND

In the digital age, data has become an important resource for enterprise management and operations. Enterprises need to collect, store, process, and use large amounts of data to support business decision-making and innovative development. However, there are security risks such as data leakage, abuse, and improper use in the data management process. These problems not only damage the reputation and brand image of enterprises, but may also expose enterprises to legal and regulatory risks and penalties. Therefore, establishing a compliant data management process has become an indispensable part of enterprises, which can effectively ensure the security and compliance of enterprise data and promote the sustainable development of enterprises.

### SUMMARY

The present disclosure provides a method and system for configuring global data compliance, an electronic device, and a program product. The technical solutions of the present disclosure are as follows:
In a first aspect of the present disclosure, a method for configuring global data compliance is provided. The method includes: determining whether a data deployment request is received; in response to receiving the data deployment request, determining a target deployment region based on the data deployment request, and building an initial system for the target deployment region; and generating a new localized system that meets deployment requirements of the target deployment region by interfacing the initial system with a preset data compliance configuration center.

Optionally, prior to interfacing the initial system with the preset data compliance configuration center, the method further includes: establishing an initial data configuration center; acquiring data configuration information for all vehicles, user configuration information, privacy agreement configuration information, and compliance process configuration information of a plurality of regions; and obtaining the preset data compliance configuration center by configuring the initial data configuration center based on the initial data configuration center and according to the data configuration information for all vehicles, the user configuration information, the privacy agreement configuration information, and the compliance process configuration information of a plurality of to-be-deployed regions.

Optionally, obtaining the preset data compliance configuration center based on the initial data configuration center and according to the data configuration information for all vehicles, the user configuration information, the privacy agreement configuration information, and the compliance process configuration information of the plurality of to-be-deployed regions includes: acquiring real-time data configuration standards for vehicle models of each of the to-be-deployed regions, diagnostic data configuration standards for vehicle models of each of the to-be-deployed regions, user-sensitive data configuration standards of each of the to-be-deployed regions, and user agreement configuration standards for vehicle models of each of the to-be-deployed regions; and obtaining the preset data compliance configuration center based on the initial data configuration center and the compliance process configuration information of the plurality of to-be-deployed regions by configuring the data configuration information for all vehicles according to the real-time data configuration standards for vehicle models of each of the to-be-deployed regions and the diagnostic data configuration standards for vehicle models of each of the to-be-deployed regions, configuring the user configuration information according to the user-sensitive data configuration standards of each of the to-be-deployed regions, configuring the privacy agreement configuration information according to the user agreement configuration standards for vehicle models of each of the to-be-deployed regions, and configuring the compliance process configuration information according to compliance process configuration standards of each of the to-be-deployed regions.

Optionally, configuring the data configuration information for all vehicles according to the real-time data configuration standards for vehicle models of each of the to-be-deployed regions and the diagnostic data configuration standards for vehicle models of each of the to-be-deployed regions includes: acquiring real-time data configuration information for all vehicle models; obtaining a plurality of configuration categories by classifying the real-time data configuration information according to categories of the real-time data configuration information; and configuring the data configuration information of all the vehicles based on the real-time data configuration standards for vehicle models of each of the to-be-deployed regions and the plurality of configuration categories.

In a second aspect of the present disclosure, a system for configuring global data compliance is provided. The apparatus includes: a determining module, configured to determine whether a data deployment request is received; a building module, configured to, in response to receiving the data deployment request, determine a target deployment region based on the data deployment request, and build an initial system for the target deployment region; and a generating module, configured to generate a new localized system that meets deployment requirements of the target deployment region by interfacing the initial system with a preset data compliance configuration center.

Optionally, the generating module is further configured to: establish an initial data configuration center; acquire data configuration information for all vehicles, user configuration information, privacy agreement configuration information, and compliance process configuration information of a plurality of regions; and obtain the preset data compliance configuration center by configuring the initial data configuration center based on the initial data configuration center and according to the data configuration information for all vehicles, the user configuration information, the privacy agreement configuration information, and the compliance process configuration information of a plurality of to-be-deployed regions.

Optionally, the generating module is further configured to: acquire real-time data configuration standards for vehicle models of each of the to-be-deployed regions, diagnostic data configuration standards for vehicle models of each of the to-be-deployed regions, user-sensitive data configuration standards of each of the to-be-deployed regions, and user agreement configuration standards for vehicle models of each of the to-be-deployed regions; and obtain the preset data compliance configuration center based on the initial data configuration center and the compliance process configuration information of the plurality of to-be-deployed regions by configuring the data configuration information for all vehicles according to the real-time data configuration standards for vehicle models of each of the to-be-deployed regions and the diagnostic data configuration standards for vehicle models of each of the to-be-deployed regions, configuring the user configuration information according to the user-sensitive data configuration standards of each of the to-be-deployed regions, configuring the privacy agreement configuration information according to the user agreement configuration standards for vehicle models of each of the to-be-deployed regions, and configuring the compliance process configuration information according to compliance process configuration standards of each of the to-be-deployed regions.

Optionally, the generating module is further configured to: acquire real-time data configuration information for all vehicle models; obtain a plurality of configuration categories by classifying the real-time data configuration information according to categories of the real-time data configuration information; and configure the data configuration information for all vehicles based on the real-time data configuration standards for vehicle models of each of the to-be-deployed regions and the plurality of configuration categories.

In a third aspect of the present disclosure, an electronic device is provided. The electronic device includes a memory, a processor, and a computer program stored on the memory and executable by the processor. The program, when executed by the processor, causes the processor to perform the method for configuring global data compliance as described in the above embodiments.

In a fourth aspect of the present disclosure, a computer program product is provided. A computer program is stored on the computer program product, and when executed by a processor, causes the processor to perform the method for configuring global data compliance as described in the aforementioned embodiments.

### BRIEF DESCRIPTION OF DRAWINGS

The above and/or additional aspects and advantages of the present disclosure will become apparent and easily understood from the description of the embodiments in conjunction with the accompanying drawings, wherein:
FIG. 1 is a schematic diagram of a data compliance system for platforms of various countries;
FIG. 2 is a flowchart of a method for configuring global data compliance according to some embodiments of the present disclosure;
FIG. 3 is a schematic diagram of a data compliance configuration center according to some embodiments of the present disclosure;
FIG. 4 is a schematic diagram of real-time data configuration for vehicle models according to some embodiments of the present disclosure;
FIG. 5 is a configuration schematic diagram of a diagnostic module according to some embodiments of the present disclosure;
FIG. 6 is a configuration schematic diagram of sensitive data according to some embodiments of the present disclosure;
FIG. 7 is a configuration diagram of a privacy agreement according to some embodiments of the present disclosure;
FIG. 8 is a schematic diagram of an enterprise localized system integrating a data compliance configuration center according to some embodiments of the present disclosure;
FIG. 9 is an exemplary diagram of a system for configuring global data compliance according to some embodiments of the present disclosure; and
FIG. 10 is a schematic structural diagram of an electronic device according to some embodiments of the present disclosure.

### Reference numerals:

10 - system for configuring global data compliance; 100 - determining module; 200 - building module; 300 - generating module.

### DETAILED DESCRIPTION

Below, embodiments of the present disclosure are described in detail, with examples of the embodiments shown in the accompanying drawings, wherein the same or similar reference numerals throughout indicate the same or similar elements or elements having the same or similar functions. The embodiments described below with reference to the drawings are exemplary and are intended to explain the present disclosure, and should not be construed as limiting the present disclosure.

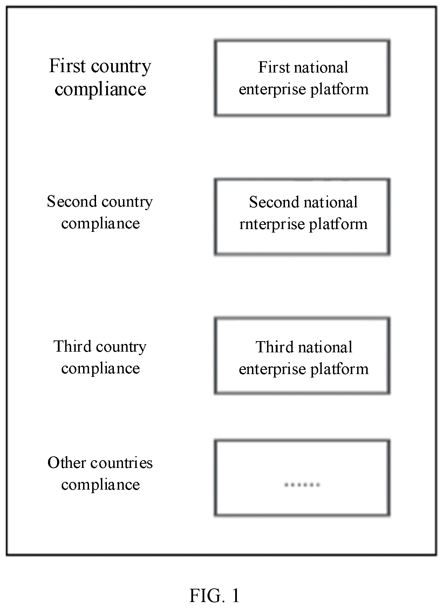

Currently, enterprises deploy independently and design business processes, data flow processes, and the like separately in accordance with data compliance laws of various countries. As shown in FIG. 1, enterprises operating in multiple countries maintain multiple systems, resulting in multiple system data compliance processes. However, as time passes, the systems deployed in various countries become increasingly differentiated, leading to higher operation and maintenance costs. For example, when compliance requirements change, the subsequent costs for data compliance transformation are also relatively high.

The embodiments of the present disclosure relating to a method and system for configuring global data compliance, an electronic device, and a program product will be described below with reference to the accompanying drawings. In view of the problems mentioned in the above background art that enterprises in different countries have different data management systems, the differences increase over time, and the operation and maintenance costs rise, the present disclosure provides a method for configuring global data compliance. In this method, whether a data deployment request is received is determined; in response to receiving a data deployment request, a target deployment region is determined based on the data deployment request, and an initial system for the target deployment region is built; a new localized system that meets deployment requirements of the target deployment region is generated by interfacing the initial system with a preset data compliance configuration center. Thus, the problems that enterprises in different countries have different data management systems, the differentiation increases over time, and the operation and maintenance costs rise are solved, and a unified configuration and a unified system for platform data compliance of various countries can be achieved, thereby realizing unified operations.

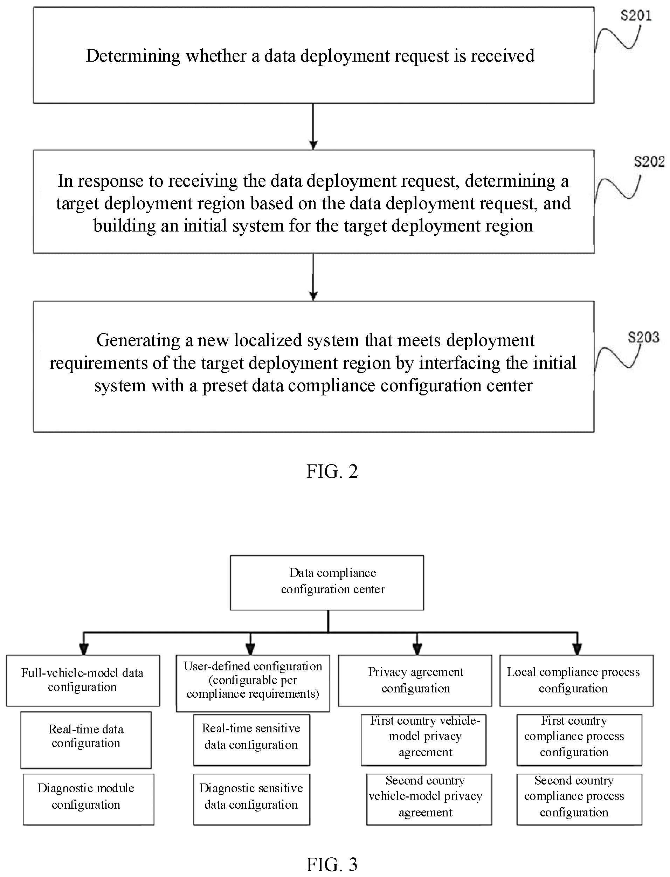

In one aspect, the embodiments of the present disclosure provide a method for configuring global data compliance, as shown in FIG. 2, FIG. 2 is a flowchart of a method for configuring global data compliance according to some embodiments of the present disclosure. The method for configuring global data compliance is applied to an electronic device, such as a computer. The method includes the following steps:

In step S201, whether a data deployment request is received is determined.

When an enterprise expands into an overseas market, its production, sales, after-sales, and operation systems require localized deployment. At this time, a data deployment request is sent through the system. When the product to be launched is a vehicle, the data deployment request may be a data configuration requirement for the vehicle.

In step S202, in response to receiving the data deployment request, a target deployment region is determined based on the data deployment request, and an initial system for the target deployment region is built.

It can be understood that the embodiments of the present disclosure take a vehicle as an example of the product to be launched. When the data deployment request is received, a target deployment region is determined, and an initial system is built based on the data compliance laws of the target deployment region.

In some embodiments, prior to interfacing the initial system with the preset data compliance configuration center, the method further includes: establishing an initial data configuration center; acquiring data configuration information for all vehicles, user configuration information, privacy agreement configuration information, and compliance process configuration information of a plurality of regions; obtaining the preset data compliance configuration center by configuring the initial data configuration center based on the initial data configuration center and according to the data configuration information for all vehicles, the user configuration information, the privacy agreement configuration information, and the compliance process configuration information of a plurality of to-be-deployed regions.

In some embodiments, obtaining the preset data compliance configuration center based on the initial data configuration center and according to the data configuration information for all vehicles, the user configuration information, the privacy agreement configuration information, and the compliance process configuration information of the plurality of to-be-deployed regions includes: acquiring real-time data configuration standards for vehicle models of each of the to-be-deployed regions, diagnostic data configuration standards for vehicle models of each of the to-be-deployed regions, user-sensitive data configuration standards of each of the to-be-deployed regions, and user agreement configuration standards for vehicle models of each of the to-be-deployed regions; and obtaining the preset data compliance configuration center based on the initial data configuration center and the compliance process configuration information of the plurality of to-be-deployed regions by configuring the data configuration information for all vehicles according to the real-time data configuration standards for vehicle models of each of the to-be-deployed regions and the diagnostic data configuration standards for vehicle models of each of the to-be-deployed regions, configuring the user configuration information according to the user-sensitive data configuration standards of each of the to-be-deployed regions, configuring the privacy agreement configuration information according to the user agreement configuration standards for vehicle models of each of the to-be-deployed regions, and configuring the compliance process configuration information according to compliance process configuration standards of each of the to-be-deployed regions.

First, the data configuration information for all vehicles, the user configuration information, the privacy agreement configuration information, and the compliance process configuration information are collected from various business systems, databases, and user interfaces of each of the to-be-deployed regions, and an initial data configuration center is built based on the collected data.

After acquiring the data compliance configuration standards of each of the to-be-deployed regions, the initial data configuration center is divided into four modules: user-defined configuration, privacy agreement configuration, full-scale vehicle data configuration, and compliance process configuration, as shown in FIG. 3. The preset data compliance configuration center is obtained by configuring the data configuration information for all vehicles according to the real-time data configuration standards for vehicle models of each to-be-deployed region and the diagnostic data configuration standards for vehicle models of each to-be-deployed region, configuring the user configuration information according to the user-sensitive data configuration standards of each to-be-deployed region, configuring the privacy agreement configuration information according to the user agreement configuration standards for vehicle modules of each to-be-deployed region, and configuring the compliance process configuration information according to the compliance process configuration standards of each of the to-be-deployed regions.

Specifically, for the vehicle real-time data configuration module: vehicle real-time data and diagnostic modules, and the like, are configured according to the real-time data configuration standards for vehicle models of each to-be-deployed region.

For the user-sensitive data configuration module: policies such as desensitization, encryption, and access control for user-sensitive data are configured according to the user-sensitive data configuration standards of each to-be-deployed region.

For the privacy agreement configuration module: the corresponding privacy agreements for vehicle models of each to-be-deployed region are configured according to the user agreement configuration standards for vehicle models of each to-be-deployed region.

For the compliance process configuration module: the compliance processes of each to-be-deployed region are configured according to the compliance process configuration standards of each to-be-deployed region.

In some embodiments, configuring the data configuration information for all vehicles according to the real-time data configuration standards for vehicle models of each of the to-be-deployed regions and the diagnostic data configuration standards for vehicle models of each of the to-be-deployed regions includes: acquiring real-time data configuration information for all vehicle models; obtaining a plurality of configuration categories by classifying the real-time data configuration information according to categories of the real-time data configuration information; and configuring the data configuration information for all vehicles based on the real-time data configuration standards for vehicle models of each of the to-be-deployed regions and the plurality of configuration categories.

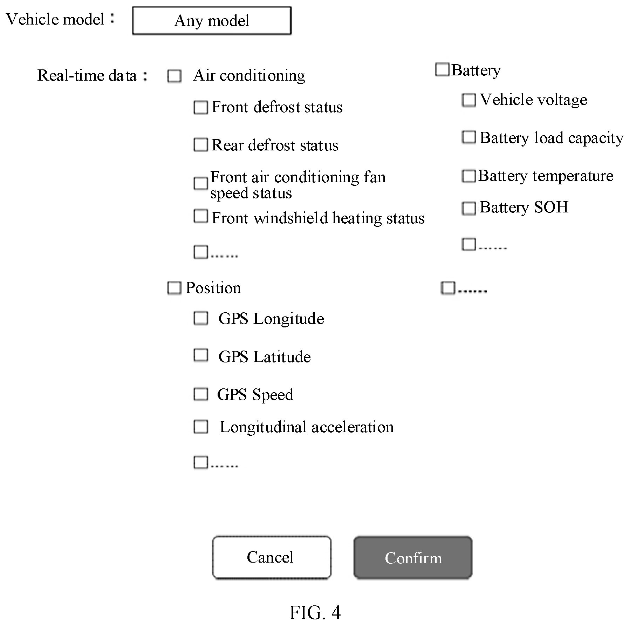

If the product to be launched is a vehicle, the real-time data may include air conditioning data, battery data, location data, and the like, as shown in FIG. 4.

The data configuration information for all vehicles is configured according to the real-time data configuration standards of each to-be-deployed region. Specifically, all real-time data signals reported by the vehicle model TBOX are configured in the initial data configuration center and classified by category, including window type, seat type, air conditioning type, location type, and the like. Real-time data signals meeting the requirements are selected, and an agreement is reached with the TBOX. The selected real-time data signals can be reported, while the unselected real-time data signals cannot be reported.

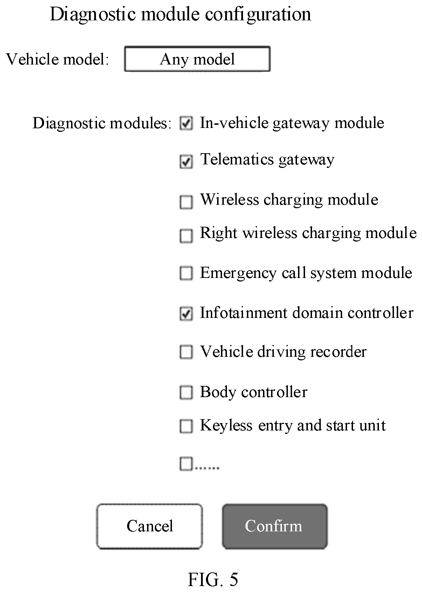

The data configuration information for all vehicles is configured according to the real-time data configuration standards of each to-be-deployed region. Specifically, the required diagnostic modules are selected, and an agreement is reached with the TBOX. The selected diagnostic modules can be reported, and the unselected diagnostic modules cannot be reported. The diagnostic modules include an in-vehicle gateway module, a telematics gateway, a wireless charging module, a vehicle traveling data recorder, a body controller, an infotainment domain controller, and the like, as shown in FIG. 5.

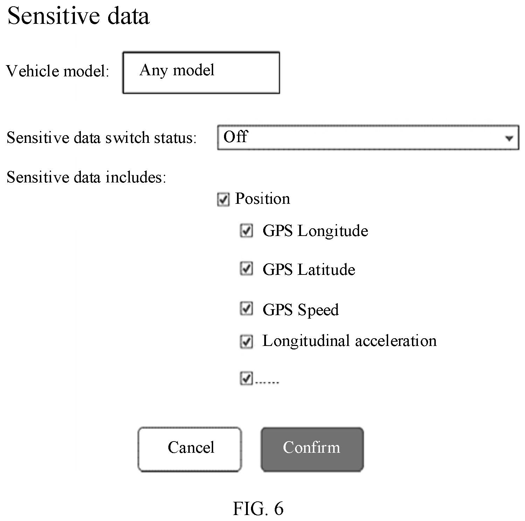

Furthermore, the user configuration information is configured according to the user-sensitive data configuration standards of each to-be-deployed region. The user-sensitive data includes vehicle position information, such as GPS longitude, GPS latitude, GPS speed, GPS acceleration, and the like, as shown in FIG. 6. Specifically, the user-sensitive data of each to-be-deployed region is determined according to the user-sensitive data configuration standards of each to-be-deployed region. Such data requires authorization by the user at the vehicle end, can be reported only after the authorization is successful, and can be collected by the initial data configuration center only thereafter, such that connected vehicle services associated with such signals can be experienced. A default collection status of such data is off, and the TBOX can report the user-sensitive data only after the user confirms activation on an APP or a vehicle machine.

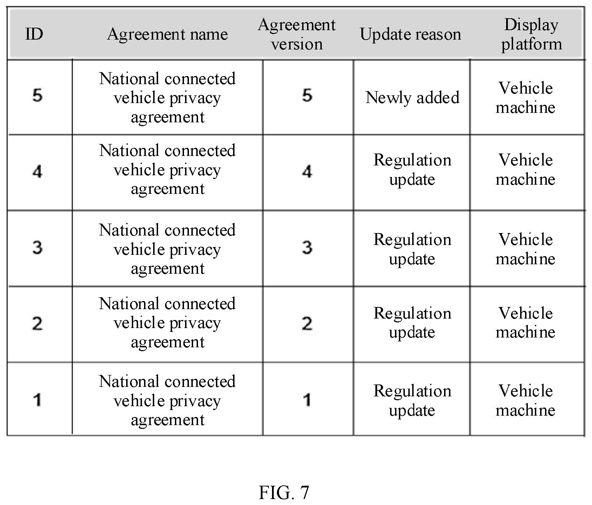

The privacy agreement configuration information is configured according to the user agreement configuration standards for vehicle models of each to-be-deployed region. The privacy agreement includes user agreements of multiple countries, with the corresponding versions of the user agreements marked, as shown in FIG. 7, such as National Connected Vehicle Privacy Agreement - Fifth Version, National Connected Vehicle Privacy Agreement - Fourth Version, National Connected Vehicle Privacy Agreement - Third Version, and the like.

The compliance process configuration information is configured according to the compliance process configuration standards of each to-be-deployed region. For example, for a specific national market: a user privacy agreement consent status needs to be verified first, and then a user-sensitive data activation status is verified. For another specific national market: the sensitive data activation status needs to be verified; and for other markets: verification information may be configured as needed.

Finally, the preset data compliance configuration center is obtained.

In step S203, a new localized system that meets deployment requirements of the target deployment region is generated by interfacing the initial system with a preset data compliance configuration center.

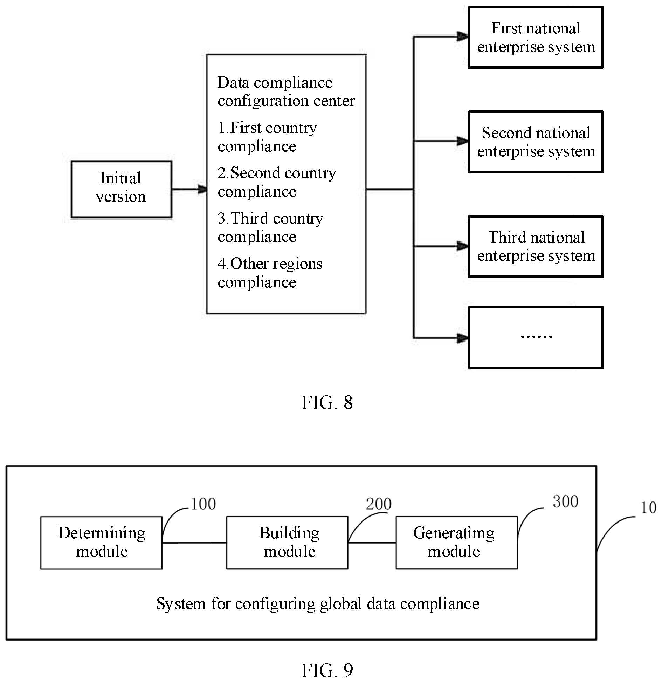

Specifically, different initial systems maintained by various enterprises are then interfaced through APIs provided by the preset data compliance configuration center, to obtain a new localized system that meets the deployment requirements of the target deployment region, as shown in FIG. 8. For example, a first national enterprise system, a second national enterprise system, a third national enterprise system, and the like.

Through the preset data compliance configuration center, which signals of vehicle models can be reported, whether users agree to the privacy agreement, and whether sensitive data reporting is permitted, and the like are standardized, and a new localized system that meets the deployment requirements of the target deployment region is finally output, which can help different enterprises upgrade from original independent deployment and operation and maintenance in various countries to building one system that can be deployed globally, achieving unified management of data compliance and thereby reducing subsequent development and operation and maintenance efforts.

According to the method for configuring global data compliance provided by the embodiments of the present disclosure, whether a data deployment request is received is determined; in response to receiving a data deployment request, a target deployment region is determined based on the data deployment request, and an initial system for the target deployment region is built; and a new localized system that meets deployment requirements of the target deployment region is generated by interfacing the initial system with a preset data compliance configuration center. Thus, the problems that enterprises in different countries have different data management systems, the differentiation increases over time, and the operation and maintenance costs rise are solved, and a unified configuration and a unified system for platform data compliance of various countries can be achieved, thereby realizing unified operations.

In another aspect, the embodiments of the present disclosure provide a system for configuring global data compliance, as shown in FIG. 9, wherein FIG. 9 is a block diagram of the global data compliance configuration system according to some embodiments of the present disclosure. The global data compliance configuration system 10 includes: a determining module 100, an establishing module 200, and a generating module 300.

The determining module 100 is used to determine whether a data deployment request is received; a establishing module 200 is used to, in response to receiving a data deployment request, determine a target deployment region based on the data deployment request, and build an initial system for the target deployment region; and a generating module 300 is used to generate a new localized system that meets the deployment requirements of the target deployment region by interfacing the initial system with a preset data compliance configuration center.

In some embodiments, the generating module 300 is further configured to: establish an initial data configuration center; acquire data configuration information for all vehicles, user configuration information, privacy agreement configuration information, and compliance process configuration information of a plurality of regions; and obtain the preset data compliance configuration center by configuring the initial data configuration center based on the initial data configuration center and according to the data configuration information for all vehicles, the user configuration information, the privacy agreement configuration information, and the compliance process configuration information of a plurality of to-be-deployed regions.

In some embodiments, the generating module 300 is further configured to: acquire real-time data configuration standards for vehicle models of each of the to-be-deployed regions, diagnostic data configuration standards for vehicle models of each of the to-be-deployed regions, user-sensitive data configuration standards of each of the to-be-deployed regions, and user agreement configuration standards for vehicle models of each of the to-be-deployed regions; and obtain the preset data compliance configuration center based on the initial data configuration center and the compliance process configuration information of the plurality of to-be-deployed regions by configuring the data configuration information for all vehicles according to the real-time data configuration standards for vehicle models of each of the to-be-deployed regions and the diagnostic data configuration standards for vehicle models of each of the to-be-deployed regions, configuring the user configuration information according to the user-sensitive data configuration standards of each of the to-be-deployed regions, configuring the privacy agreement configuration information according to the user agreement configuration standards for vehicle models of each of the to-be-deployed regions, and configuring the compliance process configuration information according to compliance process configuration standards of each of the to-be-deployed regions.

In some embodiments, the generating module 300 is further configured to: acquire real-time data configuration information for all vehicle models; obtain a plurality of configuration categories by classifying the real-time data configuration information according to categories of the real-time data configuration information; and configure the data configuration information for all vehicles based on the real-time data configuration standards for vehicle models of each of the to-be-deployed regions and the plurality of configuration categories.

It should be noted that the explanations of the aforementioned embodiments of the method for configuring global data compliance also apply to the system for configuring global data compliance in these embodiments, and will not be repeated herein.

According to the system for configuring global data compliance provided in embodiments of the present disclosure, whether a data deployment request is received is determined; in response to receiving a data deployment request, the target deployment region is determined based on the data deployment request, and an initial system for the target deployment region is built; a new localized system that meets deployment requirements of the target deployment region is generated by interfacing the initial system with a preset data compliance configuration center. Thus, the problems that enterprises in different countries have different data management systems, the differentiation increases over time, and the operation and maintenance costs rise are solved, and a unified configuration and a unified system for platform data compliance of various countries can be achieved, thereby realizing unified operations.

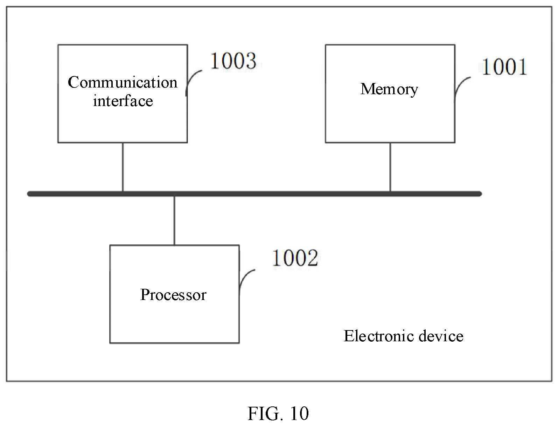

In another aspect, the embodiments of the present disclosure further provide an electronic device, referring to FIG. 10, FIG. 10 is a schematic structural diagram of an electronic device according to some embodiments of the present disclosure. The electronic device may include: a memory 1001, a processor 1002, and a computer program stored on the memory 1001 and executable by the processor 1002. The program, when executed by the processor 1002, causes the processor 1002 to perform the method for configuring global data compliance provided in the aforementioned embodiments.

Furthermore, the electronic device also includes:
A communication interface 1003 used for communication between the memory 1001 and the processor 1002.

The memory 1001 is used to store computer programs that can run on the processor 1002.

The memory 1001 may include a high-speed RAM memory and may also include a nonvolatile memory, such as at least one disk memory.

In the case where the memory 1001, the processor 1002, and the communication interface 1003 are implemented independently, the communication interface 1003, the memory 1001, and the processor 1002 may be connected to each other via a bus to complete communication therebetween. The bus may be an industry standard architecture (ISA) bus, peripheral component interconnect (PCI) bus, or extended industry standard architecture (EISA) bus, or the like. The bus may be classified into an address bus, a data bus, a control bus, and the like. For ease of representation, only one thick line is used in FIG. 10 to represent the bus, but this does not indicate that there is only one bus or only one type of bus.

In a specific implementation, in the case where the memory 1001, the processor 1002, and the communication interface 1003 are integrated onto a single chip, the memory 1001, the processor 1002, and the communication interface 1003 can communicate with each other via an internal interface.

The processor 1002 may be a central processing unit (CPU), an application-specific integrated circuit (ASIC), or one or more integrated circuits configured to implement the embodiments of the present disclosure.

The embodiments of the present disclosure also provide a computer program product having a computer program stored thereon. The computer program, when executed by a processor, causes the processor to perform the aforementioned method for configuring global data compliance.

The embodiments of the present disclosure also provide a non-transitory computer-readable storage medium having a computer program stored thereon. The program, when executed by a processor, causes the processor to perform the aforementioned method for configuring global data compliance.

In the description of the specification, reference terms such as "one embodiment," "some embodiments," "an example," "a specific example," or "some examples" indicate that the specific features, structures, materials, or characteristics described in conjunction with that embodiment or example are included in at least one embodiment or example of the present disclosure. In this specification, the schematic representations of the aforementioned terms do not necessarily refer to the same embodiment or example. Furthermore, the specific features, structures, materials, or characteristics described can be combined in any suitable manner in any one or N embodiments or examples. In addition, those skilled in the art may combine and assemble different embodiments or examples and the features thereof described in this specification without contradiction.

In addition, the terms "first" and "second" are used for descriptive purposes only and should not be construed as indicating or implying relative importance or implicitly indicating the number of indicated technical features. Consequently, features defined as "first" or "second" may explicitly or implicitly include at least one such feature. In the description of the present disclosure, the term "N" means at least two, such as two, three, and the like, unless otherwise specifically defined.

Any process or method description in the flowchart or otherwise described herein may be understood as representing modules, segments, or portions of code that include one or more executable instructions for implementing steps of a customized logic function or process. The scope of the preferred embodiments of the present disclosure includes additional implementations, in which functions may be performed in a substantially simultaneous manner or in reverse order according to the functions involved, rather than in the order shown or discussed, which should be understood by those skilled in the technical field to which the embodiments of the present disclosure pertain.

The logic and/or steps represented or otherwise described in the flowchart, for example, may be considered as ordered listings of executable instructions for implementing logical functions, and may be specifically embodied in any computer program product for use by or in conjunction with an instruction execution system, apparatus, or device (such as a computer-based system, a system including a processor, or other systems that can fetch and execute instructions from an instruction execution system, apparatus, or device). For the purpose of this specification, a "computer program product" may be any means that can contain, store, communicate, propagate, or transmit a program for use by or in conjunction with an instruction execution system, apparatus, or device. More specific examples (a non-exhaustive list) of computer program products include the following: an electrical connection part (electronic device) with one or N wires, a portable computer disk cartridge (magnetic device), a random access memory (RAM), a read-only memory (ROM), an erasable programmable read-only memory (EPROM or flash memory), an optical fiber device, and a portable compact disc read-only memory (CDROM). In addition, the computer program product may even be paper or other suitable media on which the program can be printed, as the program may be obtained electronically, for example, by optically scanning the paper or other media, followed by editing, interpreting, or processing in other suitable ways as necessary, and then stored in a computer memory.

It should be understood that various parts of the present disclosure may be implemented using hardware, software, firmware, or a combination thereof. In the aforementioned embodiments, N steps or methods may be implemented using software or firmware stored in a memory and executed by a suitable instruction execution system. For example, if implemented using hardware, as in another embodiment, any one or a combination of the following technologies well-known in the art may be used: a discrete logic circuit with logic gates for implementing logical functions on data signals, an application-specific integrated circuit with appropriate combinational logic gate circuits, a programmable gate array (PGA), a field programmable gate array (FPGA), and the like.

A person of ordinary skill in the art to which this technical field pertains may understand that all or part of the steps carried out by the method for implementing the aforementioned embodiments may be completed by a program instructing relevant hardware, and the program may be stored in a computer program product. When the program is executed, it includes one of the steps of the method embodiment or a combination thereof.

In addition, each functional unit in various embodiments of the present disclosure may be integrated into one processing module, or each unit may exist separately in physical form, or two or more units may be integrated into one module. The aforementioned integrated module may be implemented in the form of hardware or in the form of a software functional module. If the integrated module is implemented in the form of a software functional module and sold or used as an independent product, it may also be stored in a computer program product.

The aforementioned computer program product may be a read-only memory, a magnetic disk, an optical disc, or the like. Although the embodiments of the present disclosure have been shown and described above, it should be understood that the aforementioned embodiments are exemplary and should not be construed as limiting the present disclosure. Those of ordinary skill in the art may make variations, modifications, substitutions, and alterations to the aforementioned embodiments within the scope of the present disclosure.

## Claims

1. A method for configuring global data compliance, comprising:
determining whether a data deployment request is received;
in response to receiving the data deployment request, determining a target deployment region based on the data deployment request, and building an initial system for the target deployment region; and
generating a new localized system that meets deployment requirements of the target deployment region by interfacing the initial system with a preset data compliance configuration center.

2. The method according to claim 1, wherein prior to interfacing the initial system with the preset data compliance configuration center, the method further comprises:
establishing an initial data configuration center;
acquiring data configuration information for all vehicles, user configuration information, privacy agreement configuration information, and compliance process configuration information of a plurality of regions; and
obtaining the preset data compliance configuration center by configuring the initial data configuration center based on the initial data configuration center and according to the data configuration information for all vehicles, the user configuration information, the privacy agreement configuration information, and the compliance process configuration information of a plurality of to-be-deployed regions.

3. The method according to claim 2, wherein the obtaining the preset data compliance configuration center based on the initial data configuration center and according to the data configuration information for all vehicles, the user configuration information, the privacy agreement configuration information, and the compliance process configuration information of the plurality of to-be-deployed regions comprises:
acquiring real-time data configuration standards for vehicle models of each of the to-be-deployed regions, diagnostic data configuration standards for vehicle models of each of the to-be-deployed regions, user-sensitive data configuration standards of each of the to-be-deployed regions, and user agreement configuration standards for vehicle models of each of the to-be-deployed regions; and
obtaining the preset data compliance configuration center based on the initial data configuration center and the compliance process configuration information of the plurality of to-be-deployed regions by configuring the data configuration information for all vehicles according to the real-time data configuration standards for vehicle models of each of the to-be-deployed regions and the diagnostic data configuration standards for vehicle models of each of the to-be-deployed regions, configuring the user configuration information according to the user-sensitive data configuration standards of each of the to-be-deployed regions, configuring the privacy agreement configuration information according to the user agreement configuration standards for vehicle models of each of the to-be-deployed regions, and configuring the compliance process configuration information according to compliance process configuration standards of each of the to-be-deployed regions.

4. The method according to claim 3, wherein the configuring the data configuration information for all vehicles according to the real-time data configuration standards for vehicle models of each of the to-be-deployed regions and the diagnostic data configuration standards for vehicle models of each of the to-be-deployed regions comprises:
acquiring real-time data configuration information for all vehicle models;
obtaining a plurality of configuration categories by classifying the real-time data configuration information according to categories of the real-time data configuration information; and
configuring the data configuration information for all vehicles based on the real-time data configuration standards for vehicle models of each of the to-be-deployed regions and the plurality of configuration categories.

5. A system for configuring global data compliance, comprising:
a determining module, configured to determine whether a data deployment request is received;
a building module, configured to, in response to receiving the data deployment request, determine a target deployment region based on the data deployment request, and build an initial system for the target deployment region; and
a generating module, configured to generate a new localized system that meets deployment requirements of the target deployment region by interfacing the initial system with a preset data compliance configuration center.

6. The system according to claim 5, wherein the generating module is further configured to:
establish an initial data configuration center;
acquire data configuration information for all vehicles, user configuration information, privacy agreement configuration information, and compliance process configuration information of a plurality of regions; and
obtain the preset data compliance configuration center by configuring the initial data configuration center based on the initial data configuration center and according to the data configuration information for all vehicles, the user configuration information, the privacy agreement configuration information, and the compliance process configuration information of a plurality of to-be-deployed regions.

7. The system according to claim 6, wherein the generating module is further configured to:
acquire real-time data configuration standards for vehicle models of each of the to-be-deployed regions, diagnostic data configuration standards for vehicle models of each of the to-be-deployed regions, user-sensitive data configuration standards of each of the to-be-deployed regions, and user agreement configuration standards for vehicle models of each of the to-be-deployed regions; and
obtain the preset data compliance configuration center based on the initial data configuration center and the compliance process configuration information of the plurality of to-be-deployed regions by configuring the data configuration information for all vehicles according to the real-time data configuration standards for vehicle models of each of the to-be-deployed regions and the diagnostic data configuration standards for vehicle models of each of the to-be-deployed regions, configuring the user configuration information according to the user-sensitive data configuration standards of each of the to-be-deployed regions, configuring the privacy agreement configuration information according to the user agreement configuration standards for vehicle models of each of the to-be-deployed regions, and configuring the compliance process configuration information according to compliance process configuration standards of each of the to-be-deployed regions.

8. The system according to claim 7, wherein the generating module is further configured to:
acquire real-time data configuration information for all vehicle models;
obtain a plurality of configuration categories by classifying the real-time data configuration information according to categories of the real-time data configuration information; and
configure the data configuration information for all vehicles based on the real-time data configuration standards for vehicle models of each of the to-be-deployed regions and the plurality of configuration categories.

9. An electronic device, comprising: a memory, a processor, and a computer program stored on the memory and executable by the processor, wherein the program, when executed by the processor, causes the processor to perform the method for configuring global data compliance as defined in any one of claims 1 to 4.

10. A computer program product having a computer program stored thereon, wherein the program, when executed by a processor, causes the processor to perform the method for configuring global data compliance as defined in any one of claims 1 to 4.

11. A non-transitory storage medium storing a computer program thereon, wherein the computer program, when executed by a processor, causes the processor to perform the method for configuring global data compliance as defined in any one of claims 1 to 4.
